# EUROPÄISCHE PATENTSCHRIFT

(11) **EP 2 358 195 B1**
(45) Veröffentlichungstag und Bekanntmachung des Hinweises auf die Patenterteilung: **05.08.2015**
(21) Anmeldenummer: 09753079.4
(22) Anmeldetag: 10.11.2009
(51) Int. Cl.: A01J 7/02

(54) **MELKBECHER-REINIGUNGSEINHEIT MIT EINER VERTEILEREINHEIT**
TEAT CUP CLEANING UNIT COMPRISING A DISTRIBUTION UNIT
UNITÉ DE NETTOYAGE DE GOBELETS TRAYEURS COMPRENANT UNE UNITÉ DE DISTRIBUTION

(30) Priorität: 10.11.2008 DE 102008056543
(43) Veröffentlichungstag der Anmeldung: 24.08.2011
(73) Patentinhaber: GEA Farm Technologies GmbH, 59199 Bönen (DE)
(72) Erfinder: THEIS, Christelle, 58640 Iserlohn (DE)
(74) Vertreter: Neumann, Ditmar
(86) Internationale Anmeldenummer: PCT/EP2009/064890
(87) Internationale Veröffentlichungsnummer: WO 2010/052330

(56) Entgegenhaltungen:
- EP-A1- 0 852 905
- WO-A1-03/086054
- DE-A1-102006 053 602
- GB-A- 2 097 891

## Beschreibung

Der Gegenstand der Erfindung bezieht sich auf eine Melkbecher-Reinigungseinheit mit einer Verteilereinheit.

Rohmilch ist ein bedeutsames Lebensmittel sowie ein wichtiger Rohstoff für die Nahrungsmittelindustrie. Zum Schutz des Verbrauchers und zur technischen Verarbeitungsfähigkeit besteht die Notwendigkeit, dass Milch sowohl nationalen als auch internationalen Qualitätsanforderungen entspricht. In der Bundesrepublik Deutschland darf Rohmilch gemäß § 3 der Milchverordnung keine anormalen sensorischen Merkmale aufweisen, so dass gemäß Anlage 3 der Milchverordnung das Euter von Tieren, von denen Milch als Lebensmittel gewonnen wird, zu Beginn eines Melkvorgangs gereinigt werden muss. Hierbei ist es erforderlich, dass eine gründliche und vollständige Reinigung erfolgt.

Bedeutsam ist die Einhaltung vorgeschriebener hygienischer Standards, um eine hohe Milchqualität sicherzustellen. Es ist daher nicht nur notwendig, das Euter und die Zitzen des Tieres sondern auch die Komponenten einer Melkanlage zu reinigen. Die Reinigung kann auch eine Desinfektion der Komponenten der Melkanlage mit umfassen. Der Reinigungsvorgang kann mittels eines Fluids, insbesondere mittels Wasser, mit und ohne reinigenden, desinfizierenden oder sonstigen Zusätzen durchgeführt werden. Insbesondere ist es notwendig, das Melkzeug von Milchresten zu reinigen und zu desinfizieren. Es ist nicht zwingend, dass eine Desinfektion des Melkzeugs bei einem jedem Reinigungsvorgang erfolgt. Der Reinigungsvorgang kann nach jedem Melkvorgang oder nach einer bestimmten Anzahl von Melkvorgängen stattfinden.

Es ist bekannt, dass nach dem Melken einer jeden Kuh das Melkzeug mittels Wasser, einer Desinfektionslösung und wiederum Wasser gereinigt und gegebenenfalls mit Druckluft getrocknet wird. Hierbei handelt es sich um eine sogenannte Zwischenreinigung.

Zum Zweck der Reinigung des Melkzeugs, insbesondere der einzelnen Melkbecher werden die Melkbecher in Verbindung mit einer Melkbecher-Reinigungseinheit gebracht. Die Melkbecher-Reinigungseinheit kann Halter aufweisen, mittels derer das Melkzeug an der Reinigungseinheit gehalten werden. Es ist bekannt, dass die Melkbecher-Reinigungseinheit eine Verteilereinheit aufweist. Die Verteilereinheit hat einen Einlass und wenigstens zwei Auslässe für eine Reinigungsflüssigkeit. Die Anzahl der Auslässe ist abhängig von der Anzahl der zu reinigenden Melkbecher. Wird beispielsweise das Melkzeug, welches zum Melken von Kühen eingesetzt wird, gereinigt, so sind entsprechend vier Auslässe für eine Reinigungsflüssigkeit vorgesehen. Die Reinigungsflüssigkeit strömt durch den Einlass, die Verteilereinheit und aus dieser über die Auslässe in die Melkbecher.

Durch die WO 2008/058723 ist beispielsweise eine Reinigungsanlage für Melkbecher bekannt, welche eine Halterung zur Aufnahme zumindest eines Teils eines Melkbechers, der eine Öffnung zum Einführen einer Zitze enthält, aufweist. Die Reinigungsanlage weist des weiteren eine Fluidausgabeeinrichtung auf, die so ausgebildet ist, dass ein erstes Reinigungsfluid aus einer ersten Fluidquelle und ein zweites Reinigungsfluid aus einer Fluidquelle in die Öffnung gelangen kann.

Ein weiteres Ausführungsbeispiel einer Melkbecher-Reinigungseinheit beschreibt die WO 03/077645. Diese Melkbecher-Reinigungseinheit ist so ausgebildet, dass ein Reinigungsfluid über eine Leitung in den Melkbecher geleitet wird.

Durch die WO 03/086054 A1 ist eine Melkbecher-Reingigungseinheit mit einer Verteilereinheit bekannt. Die Verteilereinheit weist einen Einlass sowie zwei Auslässe für eine Reinigungsflüssigkeit auf. Der Einlass ist mit einer Leitung, durch die ein Reinigungsmittel strömt, verbunden. Hierzu ragt ein rohrförmiges ausgebildetes Teil in die Leitung hinein. In dem rohrförmigen Teil ist ein Innengewinde vorgesehen. In dem Gewinde ist ein hohlförmig ausgebildeter Verteiler eingeschraubt, der seitliche Öffnungen aufweist. Die seitlichen Öffnungen sind in Deckung mit Öffnungen im rohrförmigen Teil bringbar Durch die Lage des Einsatzteiles innerhalb des rohrförmigen Teils kann der gesamte Öffnungsquerschnitt verändert werden, so dass die Flüssigkeitsmenge, die durch den Einlass einströmt, einstellbar ist.

Eine weitere Ausführungsform einer Melkbecher-Reinigungseinheit mit einer Verteilereinheit ist durch die WO 00/76301 bekannt. Trotz eines Einstellelementes kann die Strömung durch die Verteilereinheit verändert werden.

Eine weitere Ausführungsform einer Melkbecher-Reinigungseinheit mit einer Verteilereinheit ist durch die GB 20 97 891 bekannt. Die Verteilereinheit weist eine Kammer mit einem Einlass sowie vier Auslässen auf. Durch den Einlass gelangt die Reinigungsflüssigkeit in die Kammer und verlässt diese über die vier Auslässe. Der Einlass in die Kammer ist mit einem Ventil versehen, das so ausgebildet ist, dass ein Querschnitt des Einlasses veränderbar ist.

Eine vergleichbare Ausgestaltung einer Melkbecher-Reinigungseinheit ist auch durch die Druckschrift NZ 270 183 A bekannt.

Problematisch bei einer Melkbecher-Reinigungseinheit mit einer Verteilereinheit ist, dass ein zufriedenstellendes Ergebnis der Reinigung aller Melkbecher mit einem erheblichen Verbrauch von Reinigungsmittel verbunden ist.

Hiervon ausgehend liegt der vorliegenden Erfindung die Aufgabe zugrunde, die bekannte Melkbecher-Reinigungseinheit so weiterzubilden, dass ein verbessertes Reinigungsergebnis erreicht wird.

Diese Aufgabe wird erfindungsgemäß durch eine Melkbecher-Reinigungseinheit mit den Merkmalen des Anspruchs 1 gelöst. Vorteilhafte Weiterbildungen und Ausgestaltungen der Melkbecher-Reinigungseinheit sind Gegenstand der abhängigen Ansprüche.

Die erfindungsgemäße Melkbecher-Reinigungseinheit mit einer Verteilereinheit, die einen Einlass und wenigstens zwei Auslässe für eine Reinigungsflüssigkeit aufweist, zeichnet sich dadurch aus, dass die Verteilereinheit eine Beruhigungskammer und eine Verteilerkammer aufweist. Die Beruhigungskammer ist über eine Öffnung mit der Verteilerkammer verbunden. Die Beruhigungskammer weist einen Einlass und die Verteilerkammer weist die wenigstens zwei Auslässe auf.

Durch diese erfindungsgemäße Ausgestaltung der Melkbecher-Reinigungseinheit wird ein verbessertes Reinigungsergebnis erreicht. Dadurch, dass die Reinigungsflüssigkeit in die Beruhigungskammer einströmt und von dieser in die Verteilerkammer überströmt, von wo aus sie über die Auslässe die Verteilerkammer verlässt, wird ein verbessertes Strömungsverhalten der Reinigungsflüssigkeit erreicht. Insbesondere wird die Strömung zunächst in der Beruhigungskammer beruhigt und in der Verteilerkammer noch weiter vergleichmäßigt, so dass auch eine gleichmäßige Verteilung der Flüssigkeit auf die wenigstens zwei Auslässe erreicht wird. Dadurch, dass ein verbessertes Reinigungsergebnis durch die Vergleichmäßigung der Strömung erreicht wird, ist es möglich, den Reinigungsflüssigkeitsverbrauch zu verringern, da mit einer geringeren Menge an Reinigungsflüssigkeit ein gleichwertiges Reinigungsergebnis erreicht wird.

Eine bevorzugte Ausgestaltung der Melkbecher-Reinigungseinheit zeichnet sich dadurch aus, dass die Kammern im Wesentlichen übereinander angeordnet sind. Hierdurch wird ein kompakter Aufbau der Melkbecher-Reinigungseinheit erreicht.

Um das Reinigungsergebnis noch weiter zu verbessern, wird gemäß einer weiteren vorteilhaften Ausgestaltung der erfindungsgemäßen Melkbecher-Reinigungseinheit vorgeschlagen, dass diese so ausgebildet ist, dass die Längen eines jeden Strömungsweges einer Reinigungsflüssigkeit von der Öffnung zum jeweiligen Auslass im Wesentlichen gleich sind. Hierdurch wird eine noch weiter verbesserte Vergleichmäßigung der Flüssigkeitsverteilung auf die Auslässe erreicht.

Nach einer vorteilhaften Ausgestaltung der Melkbecher-Reinigungseinheit wird vorgeschlagen, dass die Kammern in einem vorzugsweise zweiteiligen Gehäuse ausgebildet sind. Hierdurch wird eine vereinfachte Herstellung der Melkbecher-Reinigungseinheit erreicht.

Besonders bevorzugt ist eine Ausgestaltung, bei der das Gehäuse bezüglich wenigstens einer Ebene im Wesentlichen symmetrisch ausgebildet ist. Eine solche Ausgestaltung der Melkbecher-Reinigungseinheit ist insbesondere dann von Vorteil, wenn das Gehäuse wenigstens teilweise aus wenigstens einem Kunststoff ausgebildet ist. Das Gehäuse kann als ein Spritzteil hergestellt werden. An den jeweiligen Gehäusehälften, die Stoßstellen bilden, können entsprechende Nuten vorgesehen sein, in die eine Dichtung eingebracht wird, so dass eine Flüssigkeitsdichte Verbindung zwischen den Gehäusehälften erreicht wird.

Nach einer noch weiteren vorteilhaften Ausgestaltung der Erfindung wird vorgeschlagen, dass der Einlass mit einem Ventil versehen ist. Hierdurch kann eine Anpassung des Volumenstromes einer Reinigungsflüssigkeit in die Melkbecher-Reinigungseinheit erreicht werden.

Besonders bevorzugt ist eine Ausgestaltung der Melkbecher-Reinigungseinheit, bei der die Beruhigungskammer eine dem Einlass im Wesentlichen gegenüberliegend schräg verlaufende Wand aufweist. Die schräg verlaufende Wand dient als Strömungsbegrenzung für die in die Beruhigungskammer einschießende bzw. einströmende Reinigungsflüssigkeit. Strömt die Reinigungsflüssigkeit durch den Einlass in die Beruhigungskammer ein, so trifft sie auf die schräg verlaufende Wand auf. Der Flüssigkeitsstrom wird dadurch beruhigt.

Zu einer noch weiteren Beruhigung der in die Beruhigungskammer einströmenden Flüssigkeit wird gemäß einer noch weiteren vorteilhaften Ausgestaltung der Melkbecher-Reinigungseinheit vorgeschlagen, dass der freie Strömungsquerschnitt in der Beruhigungskammer vom Einlass zur Öffnung hin abnimmt.

Nach einer vorteilhaften Ausgestaltung der Melkbecher-Reinigungseinheit wird vorgeschlagen, dass die Öffnung, durch die die Reinigungsflüssigkeit aus der Beruhigungskammer in die Verteilerkammer gelangt, derart angeordnet ist, dass diese bezogen auf eine horizontale Ebene im Wesentlichen oberhalb des Einlasses liegt. Hierdurch wird sichergestellt, dass ab einem bestimmten Flüssigkeitsspiegel in der Beruhigungskammer die Flüssigkeit durch die Öffnung in die Verteilerkammer strömt.

Nach der Beendigung der Reinigung oder eines Reinigungsschrittes, in dem die Reinigungsflüssigkeit durch die Verteilereinheit strömt, wird vorgeschlagen, dass die Flüssigkeit aus der Verteilereinheit über den Einlass rückströmen kann. Hierzu ist die Verteilereinheit vorzugsweise so angeordnet, dass im montierten Zustand der Melkbecher-Reinigungseinheit ein Gefälle von der Öffnung zum Einlass und/oder vom Auslass zur Öffnung vorhanden ist.

Dieses Gefälle kann auch dadurch erreicht werden, dass die Wandung der Verteilerkammer bzw. der Beruhigungskammer entsprechend ausgebildet ist.

Ist die Verteilereinheit mit einem Gefälle montiert, so beträgt der Montagewinkel vorzugsweise 3°.

Weitere Vorteile und Einzelheiten der erfindungsgemäßen Melkbecher-Reinigungseinheit werden anhand eines bevorzugten Ausführungsbeispiels erläutert, ohne dass der Gegenstand der Erfindung auf dieses konkrete Ausführungsbeispiel beschränkt wird.

Es zeigen:
- Figur 1:: in einer perspektivischen Ansicht ein linkes Teil einer Melkbecher-Reinigungseinheit,
- Figur 2:: das linke Teil der Melkbecher-Reinigungseinheit in einer Vorderansicht,
- Figur 3:: in einer perspektivischen Ansicht das rechte Teil einer Melkbecher-Reinigungseinheit,
- Figur 4:: die Vorderansicht des Teils nach Figur 3 und
- Figur 5:: ein Dichtungselement in einer Seitenansicht.

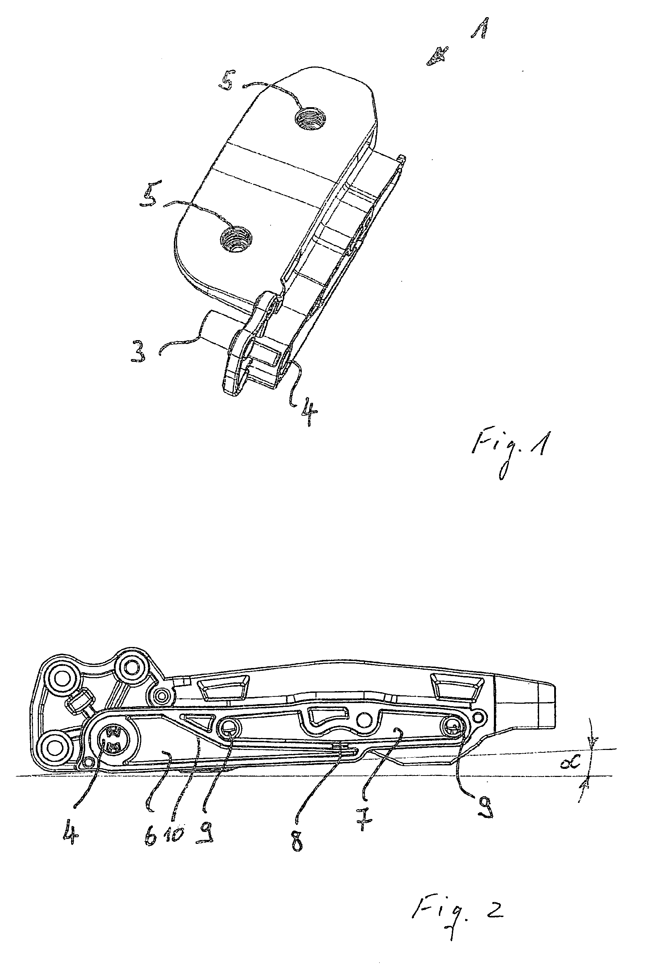

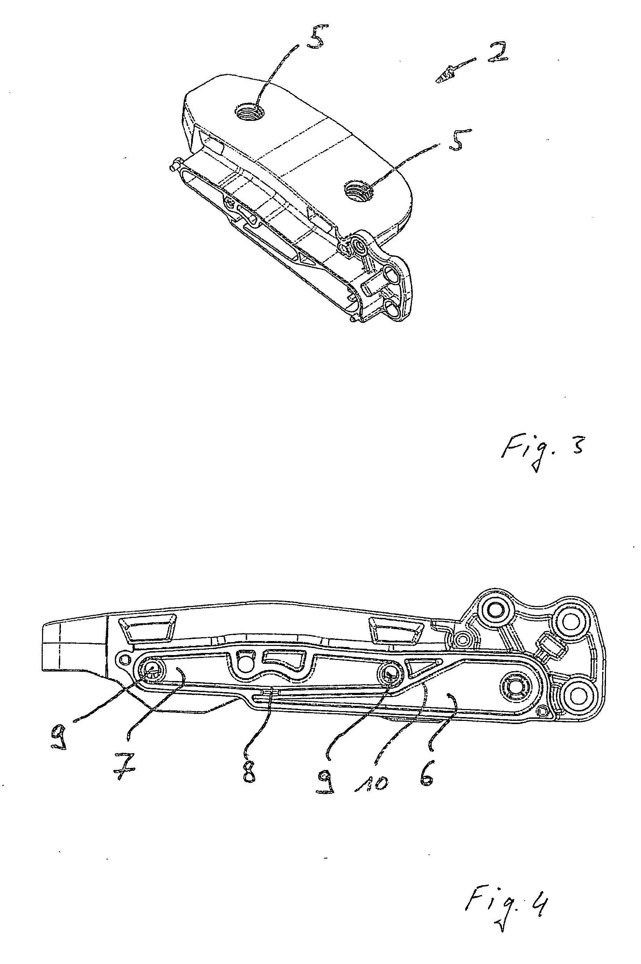

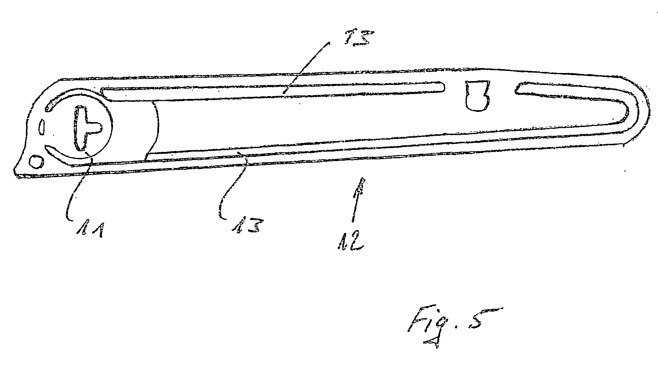

Die Figuren 1 und 3 zeigen in einer perspektivischen Ansicht ein linkes 1 und rechtes 2 Teil einer Melkbecher-Reinigungseinheit. Die Teile 1 und 2 sind stirnseitig miteinander verbindbar, so dass eine Melkbecher-Reinigungseinheit entsteht. Zwischen den Teilen kann eine Dichtung, wie sie in Figur 5 dargestellt ist, eingebracht werden, durch welche eine luftdichte Verbindung der Teile 1 und 2 ermöglicht wird. Die Teile bilden ein gemeinsames Gehäuse, welches im Wesentlichen symmetrisch ausgebildet ist. Das Gehäuse besteht aus einem Kunststoff.

Aus der Darstellung nach Figur 1 ist ersichtlich, dass ein Stutzen 3 vorgesehen ist. Der Stutzen 3 mündet in einen Einlass 4.

Figuren 1 und 3 zeigen, dass die Melkbecher-Reinigungseinheit 4 Auslässe 5 hat. Die Auslässe 5 sind gebildet durch Öffnungen, die in dem dargestellten Ausführungsbeispiel Innengewinde aufweisen. Die Innengewinde dienen zur Verbindung mit Strömungsleitmitteln und gegebenenfalls Haltern, mittels derer Melkbecher an der Melkbecher-Reinigungseinheit festgehalten werden können.

Die Melkbecher-Reinigungseinheit weist eine Beruhigungskammer 6 auf. In die Beruhigungskammer 6 mündet der Einlass 4. In dem dargestellten Ausführungsbeispiel verjüngt sich die Beruhigungskammer 6.

Aus der Darstellung nach Figur 2 bzw. 4 ist ersichtlich, dass die Beruhigungskammer 6 eine Wand 10 aufweist, welche so ausgebildet ist, dass die strömende Flüssigkeit aus dem Einlass gegen die schräg laufende Wand 10 strömt. Die Kammer weist einen dem Einlass 4 benachbarten Bereich auf, der einen konstanten Querschnitt aufweist, welcher in einen sich verringernden Querschnitt übergeht. Daran schließt sich noch eine weitere, jedoch nicht mehr so starke, Verringerung des Strömungsquerschnittes an. Es ist nicht zwingend, dass eine diskontinuierliche Querschnittsveränderung des freien Strömungsquerschnittes erfolgt. Es sind auch Ausgestaltungen möglich, bei denen der Strömungsquerschnitt kontinuierlich abnimmt.

Die Melkbecher-Reinigungseinheit weist eine Verteilerkammer 7 auf. Die Beruhigungskammer 6 und die Verteilerkammer 7 sind über eine Öffnung 8 miteinander verbunden. In dem dargestellten Ausführungsbeispiel geht die Teilungsebene durch die Öffnung 8 hindurch. Die Öffnung 8 ist in einem dem Einlass 4 gegenüberliegenden Bereich der Beruhigungskammer 6 ausgebildet. Wie aus der Darstellung in der Figur 2 bzw. Figur 4 ersichtlich ist, befindet sich die Öffnung 8 in einem Bereich der Kammer 6, in der diese einen relativ geringen freien Strömungsquerschnitt aufweist.

Die Auslässe 5 sind über Kanäle 9 mit der Verteilerkammer 7 verbunden.

Eine Reinigungsflüssigkeit strömt durch den Einlass 4 in die Beruhigungskammer 6. Von der Beruhigungskammer 6 strömt die Reinigungsflüssigkeit über die Öffnung 8 in die Verteilerkammer 7. Die Reinigungsflüssigkeit verlässt die Melkbecher-Reinigungseinheit über die Kanäle 9 und die Auslässe 5. Die Längen eines jeden Strömungsweges einer Reinigungsflüssigkeit von der Öffnung 8 zu dem jeweiligen Auslass 5 sind im Wesentlichen gleich. Dies ermöglicht eine gleichmäßige Verteilung einer Reinigungsflüssigkeit. Die Beruhigungskammer 6 hat die Aufgabe, die einströmende Reinigungsflüssigkeit in die Kammer zu beruhigen, um eine gleichmäßige Verteilung der Reinigungsflüssigkeit auf die Auslässe 5 zu ermöglichen.

In dem Einlass 4 bzw. im Stutzen 3 kann ein Ventil vorgesehen werden, durch welches der Strömungsquerschnitt des Einlasses veränderbar ist. Im Bereich des Einlasses 4 kann eine verschwenkbare Scheibe 11 vorgesehen sein. Diese Scheibe bildet eine Rückschlagklappe, durch die verhindert wird, dass Luft in die Spülleitung eingesaugt wird, wenn dort Vakuum vorhanden ist, aber kein Melkzeug mit der Melkbecher-Reinigungseinheit verbunden ist. Der Einlass bzw. der Stutzen des Einlasses kann eine Kontur aufweisen, die das Ventil aufnimmt. Das Ventil kann als ein separates Bauteil ausgebildet sein.

Nicht dargestellt sind Verbindungsmittel, mittels derer die Teile 1 und 2 miteinander verbunden werden können. Es können auch an den Teilen Zentriermittel vorgesehen sein, um eine vereinfachte Montage der Teile zu erreichen.

In der Figur 5 ist eine Dichtung 12 dargestellt, die zwischen die Teile 1 und 2 der Verteilereinheit angeordnet wird. Durch Verbindungsmittel werden die Teile 1 und 2 so miteinander verbunden, dass eine luftdichte Verbindung unter Zuhilfenahme der Dichtung 12 erreicht wird. Die Dichtung 12 weist Wülste 13 auf, die in entsprechende Nute der Teile 1, 2 einbringbar sind.

Die Dichtung 12 weist eine Scheibe 11 auf, die auslenkbar ist. Die Scheibe 11 ist gelenkig mit der Dichtung 12 verbunden, so dass diese in die Zeichnungsebene oder aus dieser heraus auslenkbar ist.

Durch die erfindungsgemäße Ausgestaltung der Melkbecher-Reinigungseinheit wird eine vergleichmäßigte Verteilung einer Reinigungsflüssigkeit auf die Auslässe ermöglicht. Hierdurch wird ein verbesserter Reinigungseffekt der Melkbecher erzielt. Es kann zu einer Einsparung von Reinigungsflüssigkeiten kommen.

### Bezugszeichen liste

- 1: linkes Teil
- 2: rechtes Teil
- 3: Stutzen
- 4: Einlass
- 5: Auslass
- 6: Beruhigungskammer
- 7: Verteilerkammer
- 8: Öffnung
- 9: Kanal
- 01: Wand
- 11: Scheibe
- 12: Dichtung
- 13: Wülste

## Patentansprüche

1. Melkbecher-Reinigungseinheit mit einer Verteilereinheit, die einen Einlass (4) und wenigstens zwei Auslässe (5) für eine Reinigungsflüssigkeit aufweist, **dadurch gekennzeichnet, dass** die Verteilereinheit eine Beruhigungskammer (6) und eine Verteilerkammer (7) aufweist, dass die Beruhigungskammer (6) über eine Öffnung (8) mit der Verteilerkammer (7) verbunden ist, wobei die Beruhigungskammer (6) mit dem Einlass (4) und die Verteilerkammer (7) mit den wenigstens zwei Auslässen (5) ausgebildet ist.

2. Melkbecher-Reinigungseinheit nach Anspruch 1, **dadurch gekennzeichnet, dass** die Kammern (6, 7) im Wesentlichen übereinander angeordnet sind.

3. Melkbecher-Reinigungseinheit nach Anspruch 1 oder 2, **dadurch gekennzeichnet, dass** die Längen eines jeden Strömungsweges einer Reinigungsflüssigkeit von der Öffnung (8) zu dem jeweiligen Auslass (5) im wesentlich gleich sind.

4. Melkbecher-Reinigungseinheit nach Anspruch 1, 2 oder 3, **dadurch gekennzeichnet, dass** die Kammern (6, 7) in einem vorzugsweise zweiteiligen (1,2) Gehäuse ausgebildet sind.

5. Melkbecher-Reinigungseinheit nach Anspruch 4, **dadurch gekennzeichnet, dass** das Gehäuse bezüglich wenigstens einer Ebene im Wesentlichen symmetrisch ausgebildet ist.

6. Melkbecher-Reinigungseinheit nach Anspruch 4 oder 5, **dadurch gekennzeichnet, dass** das Gehäuse wenigstens teilweise aus wenigstens einem Kunststoff ausgebildet ist.

7. Melkbecher-Reinigungseinheit nach wenigstens einem der vorhergehenden Ansprüche 1 bis 6, **dadurch gekennzeichnet, dass** der Einlass (4) ein Ventil aufweist.

8. Melkbecher-Reinigungseinheit nach wenigstens einem der vorhergehenden Ansprüche 1 bis 7, **dadurch gekennzeichnet, dass** die Beruhigungskammer (6) eine dem Einlass (4) im wesentlichen gegenüberliegend schräg verlaufende Wand (10) aufweist.

9. Melkbecher-Reinigungseinheit nach einem der Ansprüche 1 bis 8, **dadurch gekennzeichnet, dass** der freie Strömungsquerschnitt in der Beruhigungskammer (6) vom Einlass (4) zu Öffnung (8) hin abnimmt.

10. Melkbecher-Reinigungseinheit nach wenigstens einem der vorhergehenden Ansprüche 1 bis 9, **dadurch gekennzeichnet, dass** die Öffnung (8) bezogen auf eine horizontale Ebene im Wesentlichen oberhalb des Einlasses (4) liegt.

11. Melkbecher-Reinigungseinheit nach einem der Ansprüche 1 bis 10, **dadurch gekennzeichnet, dass** die Verteilereinheit so anordenbar und/oder ausgestaltet ist, dass im montierten Zustand der Melkbecher-Reinigungseinheit ein Gefälle von der Öffnung (8) zum Einlass (4) vorhanden ist.

12. Melkbecher-Reinigungseinheit nach einem der Ansprüche 1 bis 11, **dadurch gekennzeichnet, dass** die Verteilereinheit so anordenbar und/oder ausgestallt ist, dass im montierten Zustand der Melkbecher-Reinigungseinheit ein Gefälle vom Auslass (5) zur Öffnung (8) vorhanden ist.

## Claims

1. A teat cup cleaning unit comprising a distribution unit which has an inlet (4) and at least two outlets (5) for a cleaning liquid, **characterized in that** the distribution unit has a calming chamber (6) and a distribution chamber (7), and **in that** the calming chamber (6) is connected to the distribution chamber (7) via an opening (8), the calming chamber (6) being formed with the inlet (4) and the distribution chamber (7) being formed with the at least two outlets (5).

2. The teat cup cleaning unit as claimed in claim 1, **characterized in that** the chambers (6, 7) are arranged substantially one above the other.

3. The teat cup cleaning unit as claimed in claim 1 or 2, **characterized in that** the lengths of each flow path of a cleaning liquid from the opening (8) to the particular outlet (5) are substantially identical.

4. The teat cup cleaning unit as claimed in claim 1, 2 or 3, **characterized in that** the chambers (6, 7) are formed in a preferably two-part (1, 2) housing.

5. The teat cup cleaning unit as claimed in claim 4, **characterized in that** the housing is formed substantially symmetrically with respect to at least one plane.

6. The teat cup cleaning unit as claimed in claim 4 or 5, **characterized in that** the housing is at least partially formed from at least one plastic.

7. The teat cup cleaning unit as claimed in at least one of the preceding claims 1 to 6, **characterized in that** the inlet (4) has a valve.

8. The teat cup cleaning unit as claimed in at least one of the preceding claims 1 to 7, **characterized in that** the calming chamber (6) has a wall (10) running obliquely substantially opposite the inlet (4).

9. The teat cup cleaning unit as claimed in one of claims 1 to 8, **characterized in that** the free flow cross section in the calming chamber (6) decreases from the inlet (4) toward the opening (8).

10. The teat cup cleaning unit as claimed in at least one of the preceding claims 1 to 9, **characterized in that** the opening (8) is located substantially above the inlet (4) with respect to a horizontal plane.

11. The teat cup cleaning unit as claimed in one of claims 1 to 10, **characterized in that** the distribution unit can be arranged and/or is configured in such a manner that, in the fitted state of the teat cup cleaning unit, there is a slope from the opening (8) to the inlet (4).

12. The teat cup cleaning unit as claimed in one of claims 1 to 11, **characterized in that** the distribution unit can be arranged and/or is configured in such a manner that, in the fitted state of the teat cup cleaning unit, there is a slope from the outlet (5) to the opening (8).

## Revendications

1. Unité de nettoyage de gobelets trayeurs comprenant une unité de distribution qui présente une entrée (4) et au moins deux sorties (5) pour un liquide de nettoyage, **caractérisée en ce que** l'unité de distribution présente une chambre de tranquillisation (6) et une chambre de distribution (7), **en ce que** la chambre de tranquillisation (6) est connectée à la chambre de distribution (7) par le biais d'une ouverture (8), la chambre de tranquillisation (6) étant réalisée avec l'entrée (4) et la chambre de distribution (7) étant réalisée avec les au moins deux sorties (5).

2. Unité de nettoyage de gobelets trayeurs selon la revendication 1, **caractérisée en ce que** les chambres (6, 7) sont disposées essentiellement l'une au-dessus de l'autre.

3. Unité de nettoyage de gobelets trayeurs selon la revendication 1 ou 2, **caractérisée en ce que** les longueurs de chaque voie d'écoulement d'un liquide de nettoyage de l'ouverture (8) à la sortie respective (5) sont essentiellement identiques.

4. Unité de nettoyage de gobelets trayeurs selon la revendication 1, 2 ou 3, **caractérisée en ce que** les chambres (6, 7) sont réalisées dans un boîtier de préférence en deux parties (1, 2).

5. Unité de nettoyage de gobelets trayeurs selon la revendication 4, **caractérisée en ce que** le boîtier est réalisé essentiellement symétriquement par rapport à au moins un plan.

6. Unité de nettoyage de gobelets trayeurs selon la revendication 4 ou 5, **caractérisée en ce que** le boîtier est réalisé au moins en partie à partir d'au moins un plastique.

7. Unité de nettoyage de gobelets trayeurs selon au moins l'une quelconque des revendications précédentes 1 à 6, **caractérisée en ce que** l'entrée (4) présente une soupape.

8. Unité de nettoyage de gobelets trayeurs selon au moins l'une quelconque des revendications précédentes 1 à 7, **caractérisée en ce que** la chambre de tranquillisation (6) présente une paroi (10) s'étendant obliquement essentiellement en face de l'entrée (4).

9. Unité de nettoyage de gobelets trayeurs selon l'une quelconque des revendications 1 à 8, **caractérisée en ce que** la section transversale d'écoulement libre dans la chambre de tranquillisation (6) diminue depuis l'entrée (4) jusqu'à l'ouverture (8).

10. Unité de nettoyage de gobelets trayeurs selon au moins l'une quelconque des revendications précédentes 1 à 9, **caractérisée en ce que** l'ouverture (8) est située essentiellement au-dessus de l'entrée (4) par rapport à un plan horizontal.

11. Unité de nettoyage de gobelets trayeurs selon l'une quelconque des revendications 1 à 10, **caractérisée en ce que** l'unité de distribution peut être disposée et/ou est configurée de telle sorte que dans l'état monté de l'unité de nettoyage de gobelets trayeurs, une pente descendante soit réalisée depuis l'ouverture (8) jusqu'à l'entrée (4).

12. Unité de nettoyage de gobelets trayeurs selon l'une quelconque des revendications 1 à 11, **caractérisée en ce que** l'unité de distribution peut être disposée et/ou est configurée de telle sorte que dans l'état monté de l'unité de nettoyage de gobelets trayeurs, une pente descendante soit réalisée depuis la sortie (5) jusqu'à l'ouverture (8).
